# EUROPEAN PATENT SPECIFICATION

(11) **EP 2 363 621 B1**
(45) Date of publication and mention of the grant of the patent: **10.10.2012**
(21) Application number: 11156765.7
(22) Date of filing: 03.03.2011
(51) Int. Cl.: F16K 5/06

(54) **Metallic seat for fluid intercept valves**
Metallischer Ventilsitz
Siège de vanne métalique

(30) Priority: 03.03.2010 IT PR20100016
(43) Date of publication of application: 07.09.2011
(73) Proprietor: Tyco Valves & Controls Italia S.r.L., 29018 Lugagnano Val D'arda (IT)
(72) Inventor: Manzetti, Bruno, 29018 Lugagnano Val D'arda (PC) (IT); Bulgherani, Luca, 29018 Lugagnano Val D'arda (PC) (IT)
(74) Representative: Grünecker, Kinkeldey, Stockmair & Schwanhäusser

(56) References cited:
- US-A- 4 899 980
- US-A- 5 170 989
- US-A1- 2004 036 052
- US-B1- 6 533 241

## Description

### FIELD OF APPLICATION

The present finding applies to the field of fluid intercept members and refers to a metallic seat for fluids, in particular for "dirty" liquids, in other words comprising impurities inside them.

The type of intercept members to which the present invention refers are ball valves.

### STATE OF THE ART

Currently, the state of the art for completely metallic seals makes a contact for a metallic seal between metallic seat and ball (intercept component), whereas for the seal between the seat and the valve body it uses additional gaskets. US 4899980 shows a valve seat with two sealing lips.

### PURPOSE OF THE PRESENT INVENTION

A first purpose of the present invention is to provide a metallic seat for fluid intercept valves suitable for making a double sealing effect also from the cavity in the presence of dirty fluids.

A further purpose of the present invention is to be able to widen the field of use towards high temperatures.

The Applicant itself is the owner of an invention relating to a metallic seat suitable for directly making the metallic seal on the valve body through the configuration itself of the seat, carrying a metallic lip in contact with the valve body so that the seal is made jointly by the assembly preload given to the metallic lip and by the internal pressure of the fluid suitable for keeping the lip against the body in operative conditions.

However, the fact that it is not possible to make the seal in both flow directions partially impairs its use, since it reduces its sealing effect.

### SOLUTION TO THE TECHNICAL PROBLEM

With the solution indicated and claimed, the metallic seat in object completely makes a metallic seal in both flow directions and also from the cavity, between seat and mechanical intercept member of the valve.

In this way it is avoided having any spring-operated metallic gasket on the closure areas, and indeed the metallic seat is integral and is further activated by the pressure of the fluid in operative conditions.

The double seal is made through the particular configuration of the seat itself, carrying a double metallic lip placed in contact with the mechanical intercept member of the valve.

Said purposes and advantages are all accomplished by the metallic seat of valves for fluids at high temperatures, object of the present finding, which is characterised as foreseen in the claims displayed below.

This and other characteristics will become clearer from the following description of some embodiments illustrated purely as examples and not for limiting purposes in the attached tables of drawings, in which:
- figure 1 illustrates a section view of a valve body with metallic seat inserted, object of the present finding,
- figure 2 illustrates a detail of the coupling area according to figure 1,
- figure 3 illustrates a portion in detail of the seat in section,

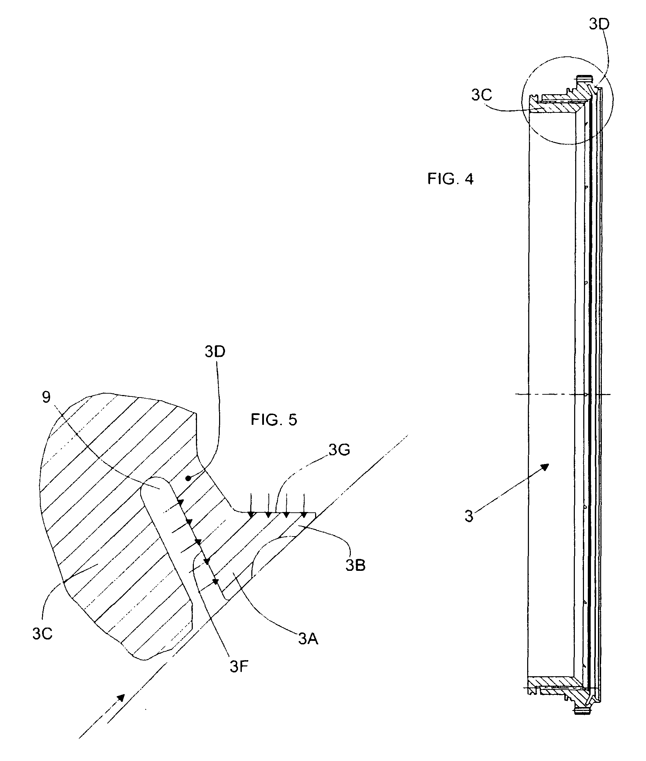

- figure 4 illustrates the seat in section,
- figure 5 illustrates a detail of just the appendage with the two lips.

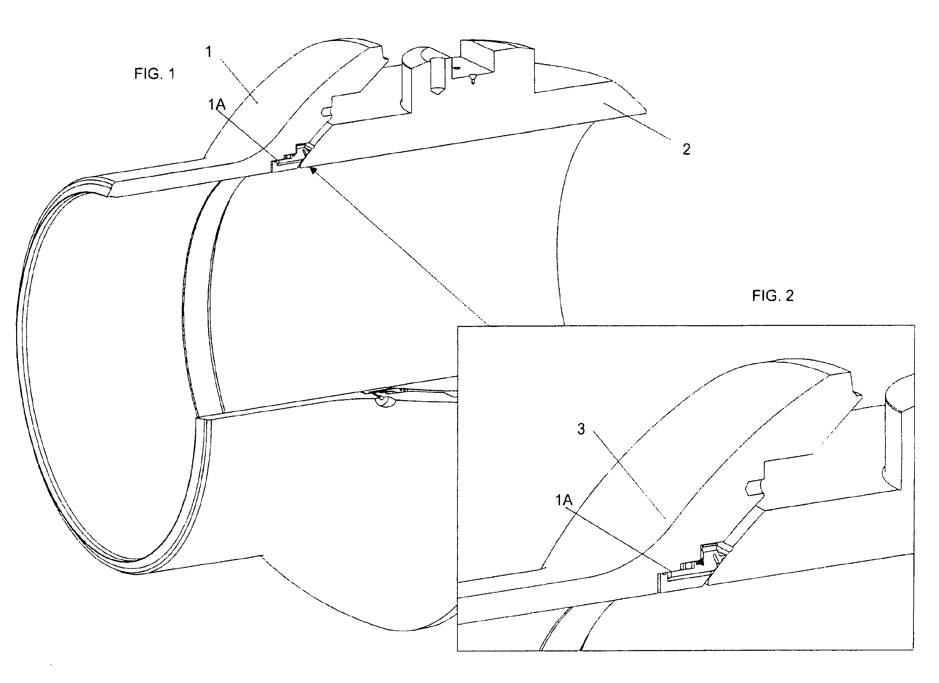

With reference to figure 1, three elements are illustrated in section, in other words a valve body 1, a fluid intercept ball 2, a metallic seat 3, object of the finding, inserted with preload between said body 1 and ball 2 and acting by means of the pressure of the fluid in operative conditions; indeed, the seal between seat 3 and intercept member 2 is made through a particular configuration of the metallic seat, described hereafter.

With particular reference to figure 2, a section of the seat 3 is illustrated, able to be inserted between the aforementioned members.

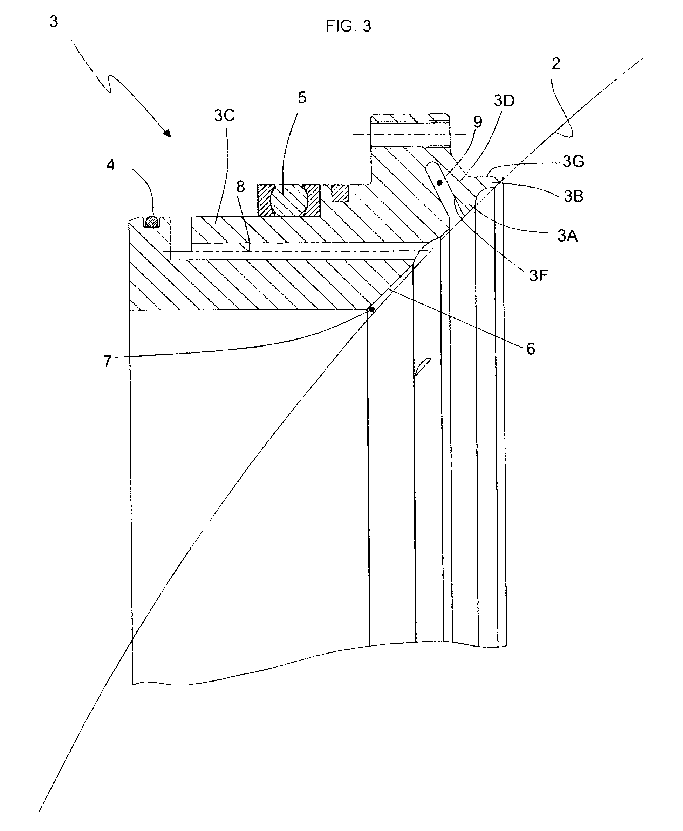

With particular reference to figure 3, the seat 3 consists of an annular portion, indicated with reference numeral 3C, suitable for being able to be housed, once the valve has been assembled, in a corresponding cavity 1A formed on the body 1, centring in it.

Between said ring 3C and the body 1 there are further rings 4 and 5 as a seal between the seat and the body.

The inner part of the seat 3, on the side of the ball 2, has a flaring 6 so as to define an angled surface, preferably but not exclusively 45° with respect to the axis.

The flaring 6 is such that, in operative configuration, i.e. with the valve assembled, the ball 2 (indicated in the figure with a circular line) does not interfere with it, so that a gap 7 is created that is filled with the pressurised fluid.

From said gap 7 the fluid can thus pass into one or more ducts 8 (the functionality of which is not relevant for the purposes of the present finding) and towards a second annular blind slit 9 formed in the seat 3 on the side of the ball. The purpose of the slit, as well as allowing the insertion of the pressurised fluid, is to create an appendage 3D that projects from the seat 3, at the rear and towards the ball 2.

In turn said appendage 3D separates into two further lips 3A, 3B both facing towards the ball 2 and of a length and configuration such as to be able to come into contact with it, thus making the connection and the barrier against the downflow of fluid.

More precisely, the lip 3A is what makes the seal of the fluid on the ball when the fluid arrives in the direction of the piping, adding to the assembly preload, since its contact surface is thrusted further against the ball by the pressurised fluid that, inserted in the slit 9, tends to make the appendage 3D open, or rather rotate it upwards, exerting its pressure against its surface 3F. In this way the metallic seat 3 directly makes the metallic seal on the intercept member 3 through the configuration itself of the metallic seat 3 through its double lips 3A, 3B that project in an appendage 3D of the body 3C and acting against the mechanical intercept member 2. Advantageously, as stated earlier, the metallic seat in object completely makes the metallic seal between seat and ball (or the mechanical intercept member) in both flow directions, thus being able to be defined as a double block and bleed valve.

The double seal is made through the action of the second lip 3B, arranged so as to receive the pressurised flow arriving between the interspace of the valve and the outside of the ball.

More specifically, said lip 3B acts to ensure the seal in the case in which, for example, there is a malfunction of the opposite seat 3, i.e. the one mounted again on the valve but on the other body part that defines the other fluid passageway. This first seat, which does not correctly make the seal, allowing the fluid to pass, will fill up the chamber outside the ball, but the pressure that is generated in said chamber pushing on the surface 3G of the lip 3B, against the ball 2, makes and restores the seal of the valve.

Of course, the same sealing effect will be made in the case in which the other seat leaks; from what has been said it can be understood that the seat/ball sealing functionality is operative also when a pressure is generated in the chamber outside the ball such as to activate both seats.

Thus the particular configuration of the seat 3 with double metallic lip in contact with the mechanical intercept member of the valve advantageously ensures the control of the flow in both sealing directions.

Of course, the seal is made both by means of the assembly preload and through the internal pressure of the fluid suitable for keeping at least one of the lips 3A, 3B pressed against the intercept member 2, preventing its downflow in operative conditions.

## Claims

1. Metallic valve seat (3) for fluids at high temperatures, that makes the metallic seal directly on a fluid intercept member (2), through the configuration itself of the, metallic seat (3) comprising an annular body (3C) **characterized in that** it comprises an annular blind slit (9) so as to form an appendage (3D) projecting from the seat (3) towards the intercept member (2), said appendage (3D) comprising double metallic lips (3A, 38) acting against the fluid intercept member (2) both in static conditions and in operative conditions so that
a first seal is made by the first lip (3A), internal and intended to withstand the thrust of the fluid inside the valve acting through said slit (9), and exerting its action against a surface thereof (3F), and
a second seal is made through the action of the second lip (3B), arranged externally and so as to withstand a possible pressure increase from outside the fluid intercept member (2), or rather between the interspace of the valve and the outside of the fluid intercept member (2).

2. Seat (3) according to claim 1, **characterised in that** the inner part of the seat (3), on the fluid intercept member (2) side, has a flaring (6) so as not to interfere the seat (3) against the fluid intercept member (2), creating a gap (7) able to be filled with pressurised fluid so that from said gap (7) the fluid is free to go into said annular blind slit (9).

3. Seat (3) according to claim 1, **characterised in that** the seat (3) and the fluid intercept member (2) interfere with one another only with respect to the lips (3A, 3B) of the appendage (3D).

4. Seat (3) according to claim 1, **characterised in that** said seal is made by means of the assembly preload given to the double lip (3A, 3B) and through the internal pressure of the fluid suitable for keeping at least one of said lips (3A, 3B) pressed against the intercept member (2), in operative conditions.

5. A valve for fluids, comprising a body (1), and at least one fluid intercept member (2) assembled together with at least one metallic sealing seat (3), **characterised in that** said at least one seat (3) is made according to what is foreseen in the previous claims and said valve is suitable for making the seal on both flow directions, so as to ensure the seal in the case in which the seat (3) does not seal the fluid on the fluid intercept member (2), when the fluid arrives in the direction of the piping; a further sealing action is generated between seat (3) and fluid intercept member (2) when a pressure is generated in the chamber outside the fluid intercept member (2) such as to activate the at least one seat (3).

## Patentansprüche

1. Metall-Ventilsitz (3) für Fluide auf hohen Temperaturen, der über den Aufbau des Metall-Sitzes (3) selbst, der einen ringförmigen Körper (3c) umfasst, die Metall-Dichtung direkt an einem Fluid-Sperrelement (2) herstellt, **dadurch gekennzeichnet, dass** er einen ringförmig Blindschlitz (9) umfasst, so dass ein Fortsatz (3D) entsteht, der von dem Sitz (3) auf das Sperrelement (2) zu vorsteht, wobei der Fortsatz (3D) doppelte Metall-Lippen (3A, 3B) umfasst, die sowohl unter Ruhebedingungen als auch unter Betriebsbedingungen auf das Fluid-Sperrelement (2) einwirken, so dass
eine erste Dichtung durch die erste Lippe (3A) innen erzeugt wird, die dazu bestimmt ist, dem Druck des Fluids im Inneren des Ventils Widerstand entgegenzusetzen, der über den Schlitz (9) wirkt und seine Wirkung auf eine Fläche derselben (3F) ausübt, und
eine zweite Dichtung durch die Wirkung der zweiten Lippe (3B) hergestellt wird, die außen so angeordnet ist, dass sie einem möglichen Druckanstieg von außerhalb des Fluid-Sperrelementes (2), oder vielmehr zwischen dem Innenraum des Ventils und der Außenseite des Fluid-Sperrelementes (2), Widerstand entgegensetzt.

2. Sitz (3) nach Anspruch 1, **dadurch gekennzeichnet, dass** der innere Teil des Sitzes (3) an der Seite des Fluid-Sperrelementes (2) eine Aufweitung (6) aufweist, so dass der Sitz (3) nicht in Kontakt mit dem Fluid-Sperrelement (2) kommt und ein Zwischenraum (7) geschaffen wird, der mit unter Druck stehendem Fluid gefüllt werden kann, so dass das Fluid aus dem Zwischenraum (7) ungehindert in den ringförmigen Blindschlitz (9) gelangen kann.

3. Sitz (3) nach Anspruch 1, **dadurch gekennzeichnet, dass** der Sitz (3) und das Fluid-Sperrelement (2) nur in Bezug auf die Lippen (3A, 3B) des Fortsatzes (3D) in Kontakt mit einander kommen.

4. Sitz (3) nach Anspruch 1, **dadurch gekennzeichnet, dass** die Dichtung mittels der auf die doppelte Lippe (3A, 3B) wirkenden Montage-Vorspannung sowie über den Innendruck des Fluids hergestellt wird, der sich dazu eignet, unter Betriebsbedingungen weinigstens eine der Lippen (3A, 3B) an das Sperrelement (2) gepresst zu halten.

5. Ventil für Fluide, das einen Körper (1) und wenigstens ein Fluid-Sperrelement (2) umfasst, die mit wenigstens einem Metall-Dichtungssitz (3) zusammengesetzt sind, **dadurch gekennzeichnet, dass** der wenigstens eine Sitz (3) gemäß den vorangehenden Ansprüchen hergestellt ist und dass sich das Ventil dazu eignet, die Dichtung in beiden Strömungsrichtungen herzustellen, um die Dichtung in dem Fall zu gewährleisten, in dem der Sitz (3) das Fluid an dem Fluid-Sperrelement (2) nicht abdichtet, wenn das Fluid in der Richtung der Rohrleitung eintrifft, und eine weitere Dichtungswirkung zwischen dem Sitz (3) und dem Fluid-Sperrelement (2) erzeugt wird, wenn ein Druck in der Kammer außerhalb des Fluid-Sperrelementes (2) erzeugt wird, um den wenigstens einen Sitz (3) zu aktivieren.

## Revendications

1. Siège de soupape métallique (3) pour des fluides à températures élevées, qui réalise l'étanchéité directement sur un élément d'interception de fluide (2), grâce à la configuration même du siège métallique (3) comprenant un corps annulaire (3C), **caractérisé en ce qu'**il comprend une fente borgne annulaire (9) de manière à former un appendice (3D) qui dépasse du siège (3) en direction de l'élément d'interception (2), ledit appendice (3D) comprenant des lèvres métalliques doubles (3A, 3B) qui agissent contre l'élément d'interception de fluide (2) à la fois dans des conditions statiques et dans des conditions de fonctionnement de telle sorte
qu'une première étanchéité est réalisée par la première lèvre (3A), prévue à l'intérieur et destinée à résister à la poussée du fluide à l'intérieur de la soupape, qui agit à travers la fente (9) et exerce son action contre une surface (3F) de celle-ci, et
qu'une seconde étanchéité est réalisée grâce à l'action de la seconde lèvre (3B), disposée à l'extérieur et de manière à résister à une éventuellement augmentation de pression à partir de l'extérieur de l'élément d'interception de fluide (2), ou plutôt entre l'espace intermédiaire de la soupape et l'extérieur de l'élément d'interception de fluide (2).

2. Siège (3) selon la revendication 1, **caractérisé en ce que** la partie intérieure du siège (3), du côté de l'élément d'interception de fluide (2), a une partie élargie (6) de manière à ne pas gêner le siège (3) contre l'élément d'interception de fluide (2), créant un espace (7) apte à être rempli avec le fluide sous pression, de sorte qu'à partir dudit espace (7), le fluide est libre d'entrer dans la fente borgne annulaire (9).

3. Siège (3) selon la revendication 1, **caractérisé en ce que** le siège (3) et l'élément d'interception de fluide (2) ne se gênent que par rapport aux lèvres (3A, 3B) de l'appendice (3D).

4. Siège (3) selon la revendication 1, **caractérisé en ce que** l'étanchéité est réalisée à l'aide de la contrainte préalable de l'ensemble imposée à la double lèvre (3A, 3B) et grâce à la pression interne du fluide apte à maintenir l'une au moins des lèvres (3A, 3B) pressée contre l'élément d'interception (2), dans des conditions de fonctionnement.

5. Soupape pour fluide, comprenant un corps (1) et au moins un élément d'interception de fluide (2) assemblé avec au moins un siège d'étanchéité métallique (3), **caractérisée en ce que** le ou les sièges (3) sont réalisés selon ce qui prévu dans les revendications précédentes, et la soupape est apte à réaliser l'étanchéité sur les deux directions d'écoulement, de manière à assurer l'étanchéité au cas où le siège (3) ne réalise pas l'étanchéité pour le fluide sur l'élément d'interception de fluide (2), quand le fluide arrive dans la direction du conduit ; une autre action d'étanchéité est produite entre le siège (3) et l'élément d'interception de fluide (2) quand une pression est produite dans la chambre à l'extérieur de l'élément d'interception de fluide (2), de manière à activer le ou les sièges (3).
